# EUROPÄISCHE PATENTSCHRIFT

(11) **EP 1 212 544 B1**
(45) Veröffentlichungstag und Bekanntmachung des Hinweises auf die Patenterteilung: **29.10.2008**
(21) Anmeldenummer: 00967665.1
(22) Anmeldetag: 13.09.2000
(51) Int. Cl.: F16D 3/223

(54) **KUGELKÄFIG**
BALL CAGE
CAGE A BILLES

(30) Priorität: 14.09.1999 EP 99118232; 06.12.1999 DE 19958719
(43) Veröffentlichungstag der Anmeldung: 12.06.2002
(73) Patentinhaber: Iprotec Maschinen- und Edelstahlprodukte GmbH, 32469 Petershagen-Friedewalde (DE); Visteon Global Technologies, Inc., Dearborn, Michigan 48126 (US)
(72) Erfinder: ADAMS, Franz-Josef, 50739 Köln (DE); ALVAREZ-MENDEZ, Angel, 52223 Stolberg (DE); SCHELLHAAS, Ralf, Andreas, 50996 Köln (DE); STEUDE, Volker, 50765 Köln (DE); STRÖTGEN, Peter, Josef, 42489 Wülfrath (DE); KOCHSIEK, Guido, 33818 Leopoldshöhe (DE)
(74) Vertreter: Bauer, Wulf
(86) Internationale Anmeldenummer: PCT/EP2000/008926
(87) Internationale Veröffentlichungsnummer: WO 2001/020185

(56) Entgegenhaltungen:
- EP-A- 0 927 832
- WO-A-99/30052
- US-A- 3 815 381
- US-A- 4 633 744

## Beschreibung

Die vorliegenden Erfindung betrifft einen Kugelkäfig für Gleichlaufgelenke, gebildet aus einem Rohling in Form eines im wesentlichen ringförmigen Kugelsegmentes, mit entlang des Äquators angeordneten fensterartigen Kugeltaschen mit im wesentlichen äquatorparallel ausgebildeten Anlageflächen für das Zusammenwirken mit Gelenkkugeln, mit an den äußeren Ringkantenbereichen ausgebildeten, im wesentlichen ringförmig verlaufenden Funktionsflächen für das Zusammenwirken mit einer Gelenkglocke und mit an inneren Ringbereichen ausgebildeten, im wesentlichen ringförmig verlaufenden Funktionsflächen für das Zusammenwirken mit einem Gelenkstem.

Kugelkäfige bilden zusammen mit der sogenannten Gelenkglocke - auch Achszapfen genannt -, der Kugelnabe - auch Gelenkstern genannt - sowie den Kugeln die wesentlichen Elemente eines Festgelenks. Die Elemente Kugelkäfig-Achszapfen und Kugelkäfig-Kugelnabe sind dabei mit Spielpassungen gepaart, wobei sich die üblichen Fertigteiltoleranzen funktionsbedingt im Bereich weniger Mikrometer bewegen. Kugelkäfige üblicher Bauart sind durch eine kontinuierliche Formgebung derjenigen Flächen des Bauteils gekennzeichnet, die nach außen mit dem Achszapfen und nach innen mit der Kugelnabe kontaktieren. Sowohl die Außenkontur wie auch die Innenkontur der ringförmigen Kugelsegmente ist jeweils als Radius ausgebildet, der sich von der einen seitlichen Begrenzungsfläche über den Stegbereich bis auf die gegenüberliegende andere seitliche Begrenzungsfläche erstreckt.

Bei Kraftfahrzeugen mit Vorderantrieb werden die gelenkten Räder angetrieben. Deshalb müssen Vorderradachswellen Gelenke haben, die sowohl das Ein- und Ausfedern der Räder als auch deren Lenkeinschlag zulassen. Um einen möglichst gleichförmigen Antrieb der Räder zu ermöglichen, werden hierzu Gleichlaufgelenke (homokinetische Gelenke) verwendet. Bei Gelenken an Vorderachswellen, aber auch an den Hinterachsen, werden hierbei unter anderem als Topfgelenke ausgebildete Gleichlauf-Festgelenke verwendet, während bei Gelenken an Hinterachswellen als Topfgelenke ausgebildete Gleichlauf-Verschiebegelenke verwendet werden, die neben einer Beugung des Gelenks eine axiale Verschiebung ermöglichen.

Bei dem Gleichlauf-Festgelenk weisen Kugelschale und Kugelstern gekrümmte Bahnen auf, auf denen sich die Kugeln bewegen. Bei dem Gleichlauf-Verschiebegelenk sind die Bewegungsbahnen an Kugelschale und Kugelstern eben ausgebildet. Derartige Kugelkäfige sind ringförmig und haben Kugelsegmentformen. Die Materialstärke dieses sphärisch ausgebildeten Ringes beträgt einige Millimeter. Die fensterartigen Kugeltaschen entlang des Äquators haben in den zum Äquator im wesentlichen parallel verlaufenden Kanten Funktionsflächenbereiche zum Zusammenwirken mit den Gelenkkugeln. Am oberen und unteren äußeren Ringbereich sind umlaufende ringförmige Funktionsflächen ausgebildet, die dem Zusammenwirken des Kugelkäfigs mit einer Gelenkglocke dienen. Im inneren Bereich sind oberhalb und unterhalb der fensterartigen Ausnehmungen ringförmige Flächen als Funktionsflächen ausgebildet, die dem Zusammenwirken des Kugelkäfigs mit dem Gelenkstern dienen. Das Gleichlaufgelenk soll praktisch kein Spiel aufweisen, so daß die zusammenwirkenden Bereiche von Kugelkäfig, Gelenkglocke und Gelenkstern sehr engen Toleranzen unterliegen.

Bei den aus der Praxis bekannten, aus Kugelstern, Kugelkäfig und Kugelschale bestehenden Gleichlaufgelenken werden die mit kugelringförmigen inneren und äußeren Lagerflächen und Kugeltaschen für die Aufnahme der drehmomentübertragenden Kugeln versehenen Kugelkäfige in einer Vielzahl von Arbeitsschritten auf verschiedenen Maschinen hergestellt. Ausgehend von einem hohlen Rohr, das in etwa den Außendurchmesser des zu fertigenden Kugelkäfigs aufweist, wird bei den bekannten Verfahren zur Herstellung der Rohlinge für Kugelkäfige zunächst ein Rohrabschnitt von dem Ausgangsrohr abgetrennt, dessen Breite in etwa der Breite des zu fertigenden Kugelkäfigs entspricht. Anschließend werden die kugelringförmigen inneren und äußeren Lagerflächen in einem Schmiedeprozeß geformt, danach gedreht und die Kugeltaschen auf einer weiteren Maschine aus den kugelringförmigen Lagerflächen ausgestanzt, bevor diese Rohlinge nach einer Einsatzhärtung zur Fertigbearbeitung gelangen.

Nachteilig bei diesem bekannten Herstellungsverfahren ist einerseits, daß die Herstellung eines jeden Kugelkäfigs mehrere Arbeitsschritte umfaßt, die auf verschiedenen Maschinen ausgeführt werden müssen und andererseits bei der Schmiedebearbeitung und dem Ausstanzen der Kugeltaschen Gefügestörungen und Spannungen im Werkstoff des Kugelkäfigs erzeugt werden. Aufgrund dieser Vielzahl von Arbeitsschritten auf verschiedenen Maschinen ist die Herstellung dieser Kugelkäfige zeitaufwendig und teuer. Auch ist bekannt, daß ein Rohling gehärtet und an sämtlichen Flächen durch entsprechende Bearbeitung, üblicherweise Hartdrehen, auf das Toleranzmaß bearbeitet. Dabei entstehen sehr exakte und glatte Funktionsflächen. Da Festgelenke üblicherweise konzipiert sind, um auch unter Beugung hoher Kräfte bei einer entsprechenden Lebensdauer übertragen zu können, werden als Werkstoffe ausschließlich gehärtete Stähle verwendet. Um die engen Fertigungstoleranzen einhalten zu können, erfolgt die Fertigbearbeitung in der Regel am gehärteten Bauteil. Dies geschieht üblicherweise entweder durch spanabhebende Verfahren mit geometrisch unbestimmter Schneide wie z. B. Hartdrehen oder Hartfräsen.

Ein bisher ungelöstes Problem bei der Hartbearbeitung von Kugelkäfigen besteht darin, daß es bedingt durch die am Umfang eingebrachten Fenster zum unterbrochenen Schnitt im Bereich der Stege kommt, während das Werkzeug in den seitlich der Stege liegenden Bereichen im kontinuierlichen Schnitt arbeitet. Die Beanspruchung durch den unterbrochenen Schnitt einerseits und der Wechsel in der Beanspruchungsart von kontinuierlich zu unterbrochen wirkt sich ungünstig auf die Standzeit des Werkzeug aus.

Zur Bearbeitung des gehärteten Stahls müssen besondere Bearbeitungselemente verwendet werden, die üblicherweise sehr hochwertig und kostenintensiv sind.

Aufgrund des unterbrochenen Schnittes können nur vergleichsweise geringe Schnittgeschwindigkeiten eingestellt werden, da ansonsten die Schneiden erhöhtem Verschleiß bis hin zum Bruch der Schneide ausgesetzt werden. Auch hat sich gezeigt, dass die Festigkeit des fertig bearbeiteten Kugelkäfigs wegen der Oberflächenbearbeitung, die eine unkontrollierte Unterbrechung des Oberflächenaufbaus des Rohlings bewirkt, eine Störung des so genannten Faserverlaufes, Kerbwirkungen unterliegt und eine begrenzte Festigkeit hat.

Die EP 0927832 beschreibt ein Verfahren zur Rohlingsherstellung. Dabei umfasst die Herstellung eines jeden Kugelkäfigs mehrere Arbeitsschritte. Aufgrund dieser Vielzahl von Arbeitsschritten auf verschiedenen Maschinen ist die Herstellung dieser Kugelkäfige nach den in der EP 0927832 beschriebenen Verfahren zeitaufwendig und teuer.

Insgesamt ist die Herstellung von Kugelkäfigen der gattungsgemäßen Art sehr aufwendig, die Ausschussraten und der Werkzeugbedarf sind verhältnismäßig hoch und die fertig gestellten Kugelkäfige trotz intensiver Massenfertigung noch hochpreisig.

Ausgehend vom vorbeschriebenen Stand der Technik liegt der vorliegenden Erfindung die **Aufgabe** zugrunde, einen Kugelkäfig der gattungsgemäßen Art dahingehend weiterzubilden, dass dieser in kürzeren Bearbeitungszeiten wirtschaftlicher und einfacher herstellbar ist.

Zur technischen **Lösung** dieser Aufgabe wird mit der Erfindung vorgeschlagen, dass bei dem Rohling wenigstens einige der Funktionsflächen gegenüber benachbarten Flächen des Kugelkäfigs erhaben ausgebildet sind.

Durch die erfindungsgemäße Ausgestaltung der gegenüber benachbarten Flächen erhabenen, also mit Aufmass gebildeten Funktionsflächenbereiche beim Rohling besteht nunmehr die Möglichkeit, die Fertigbearbeitung, vorzugsweise durch Hartdrehen, auf die Funktionsflächenbereiche oder auf einige Funktionsflächenbereiche zu beschränken. Im Ergebnis werden dadurch nur wenige Flache bearbeitet, der unterbrochene Schnitt durch weitere Bearbeitung der zwischen den fensterartigen Ausnehmungen verbliebenen Stege entfällt und die Erhabenheit der Funktionsflächenbereiche kann derart festgelegt werden, dass die Funktionsflächen nach der Fertigbearbeitung gegenüber den benachbarten Flächen immer noch erhaben sind.

Der Kugelkäfig wird vorzugsweise bei der Herstellung gerollt, also aus einem Rohrstück durch Rollen verformt. Die fensterartigen Kugeltaschen werden gemäß einem vorteilhaften Vorschlag der Erfindung gestanzt, wobei die Kugelanlagefläche, d. h. die äquatorparallelen ausgebildeten Flächen mit Aufmaß hergestellt werden können. Der besondere Vorteil ergibt sich bei der Drehbearbeitung dieser Flächen, da die Bahn des Schneidstahls unter besseren Schneidbedingungen verläuft. Dies insbesondere dann, wenn nur die Anlagefläche selbst mit Aufmaß ausgebildet ist, die Kugeltasche selbst aber sehr viel länger ist, so daß auf beiden Seiten nicht zu bearbeitende Freiräume verbleiben. Durch das Rollen werden keine Kerbkräfte auf den Rohling ausgeübt und es ergibt sich ein homogener Faserverlauf des Materials, so daß sich insgesamt eine höhere Festigkeit ergibt, die zu höheren Standzeiten führt.

Insgesamt wird durch die Aufmaßausbildung der durch Drehen zu bearbeitenden gehärteten Funktionsflächen die Bearbeitungszeit erheblich verkürzt, da die Drehgeschwindigkeiten des Werkstückes erheblich erhöht, z. B. verdoppelt werden können. Dadurch, daß ein unterbrochener Schnitt weitestgehend vermeidbar ist, läßt sich die Bearbeitungszeit durch höhere Geschwindigkeiten verkürzen und eine mögliche Gefährdung der Bearbeitungswerkzeuge ist auf Mindestmaß reduziert.

Weitere Vorteile und Merkmale der Erfindung ergeben sich aus der folgenden Beschreibung anhand der Figuren. Dabei zeigen:
- Fig. 1: eine halb geschnittene Seitenansicht eines Ausführungsbeispiels für einen Kugelkäfig;
- Fig. 2: eine halb geschnittene Seitenansicht eines alternativen Ausführungsbeispiels für einen Kugelkäfig
- Fig. 3: eine halb geschnittene Seitenansicht eines alternativen Ausführungsbeispiels für einen Kugelkäfig;
- Fig. 4: eine halb geschnittene Seitenansicht eines alternativen Ausführungsbeispiels für einen Kugelkäfig;
- Fig. 5: eine halb geschnittene Seitenansicht eines alternativen Ausführungsbeispiels für einen Kugelkäfig und
- Fig. 6: eine halb geschnittene Seitenansicht eines alternativen Ausführungsbeispiels für einen Kugelkäfig.

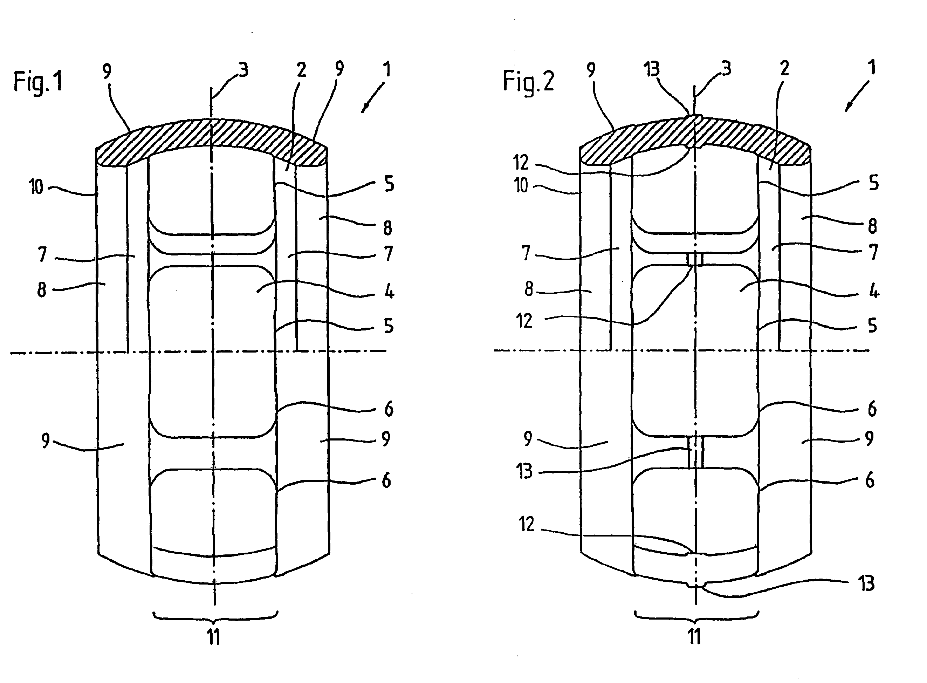

Der in Fig. 1 gezeigte Kugelkäfig 1 besteht aus einem ringförmigen Kugelsegment 2. Entlang des Äquators, gezeigt durch die Mittellinie 3, sind Kugeltaschen 4 ausgebildet, die Kugelanlageflächen 5 aufweisen. Die Kugelanlageflächen 5 nehmen nur einen Teil der im wesentlichen äquatorparallelen Kante 6 der Kugeltasche ein, so daß sich beidseitig Freiräume ergeben. Ringartige Funktionsflächen 7 für den Ablauf mit dem Gelenkstern und 9 für die Zusammenwirkung mit der Gelenkglocke sind im Ringinneren bzw. Ringäußeren ausgebildet. Wie die Figur zeigt, sind alle Funktionsflächenbereiche mit Aufmaß ausgeführt, also die Bereiche 7 und 9. Auch die Kugelanlageflächen 5 sind mit Aufmaß ausgeführt. Nach der Herstellung des Rohlings durch Rollen und dem Ausbilden der Kugeltaschen, beispielsweise durch Stanzen, wird der Rohling gehärtet. Anschließend werden die mit Aufmaß ausgeführten Funktionsflächen durch Drehen bearbeitet und auf das Fertigmaß gebracht. Dabei sind nur die Flächen 5, 7 und 9 zu bearbeiten. Die Referenz- bzw. Aufspannflächen wie beispielsweise der ringförmige Bereich 8 oder eine ebene Referenzkante 10 werden während des Drehvorgangs entsprechend hergestellt.

Es zeigt sich, daß am gesamten Bereich 11 keinerlei Bearbeitung erfolgen muß, somit also jeglicher unterbrochener Schnitt vermieden ist. Durch die Aufmaßausbildung können die Funktionsflächen gemäß den Toleranzforderungen abgearbeitet werden und sind auch nach Fertigstellung noch erhaben gegenüber den übrigen Flächen.

Die erfindungsgemäße Ausbildung des Rohlings derart, daß der gesamte Bereich 11 unbearbeitet bleiben kann, da dort keine Funktionsflächen auszubilden sind, bewirkt eine erhebliche Verkürzung der Bearbeitungszeit und Vereinfachung des Herstellungsverfahrens insgesamt.

Fig. 2 zeigt einen Kugelkäfig wie Fig. 1, nur daß im Stegbereich 11 zusätzlich mindestens eine Abstützfläche außen 13 und mindestens eine Abstützfläche innen 12 ausgeprägt sind, die mitbearbeitet werden.

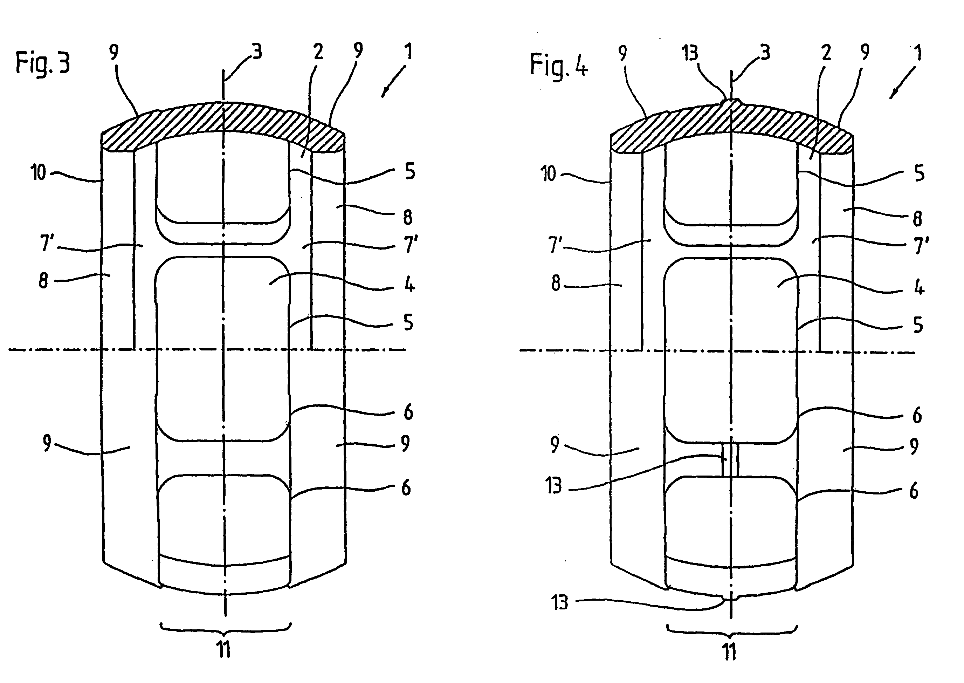

Fig. 3 zeigt einen Kugelkäfig wie Fig. 1, mit dem Unterschied, daß nur die äußeren ringförmigen Funktionsflächen 9 erhaben sind, während die Funktionsfläche innen 7 nicht erhaben ausgebildet ist.

Fig. 4 zeigt einen Kugelkäfig wie Fig. 3, nur daß im Stegbereich 11 zusätzlich mindestens eine Abstützfläche außen 13 ausgeprägt ist, die mitbearbeitet wird.

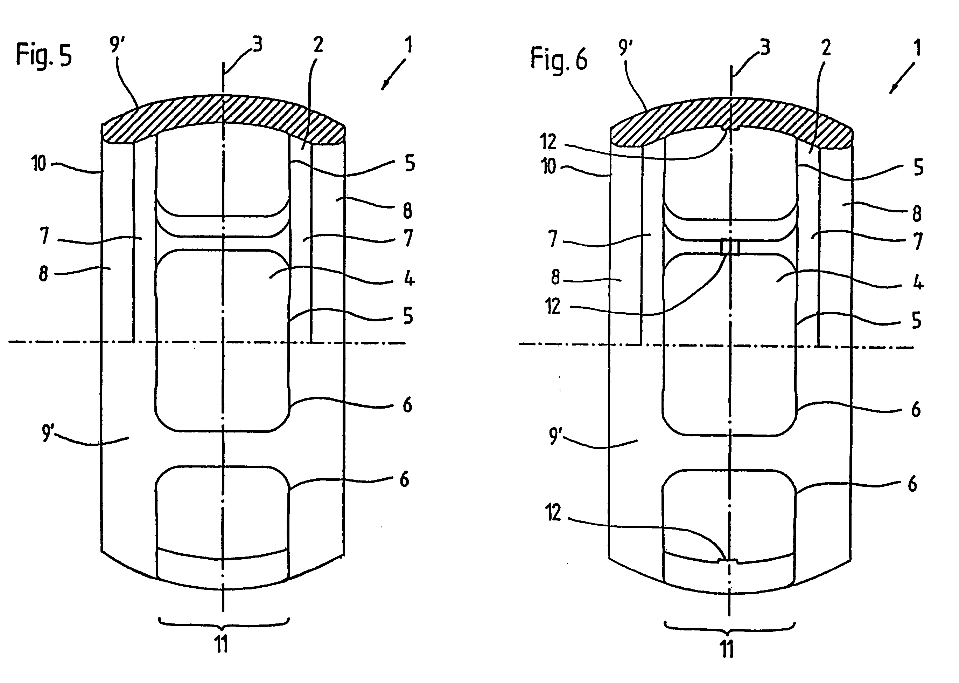

Fig. 5 zeigt einen Kugelkäfig wie Fig. 1, mit dem Unterschied, daß nur die inneren ringförmigen Funktionsflächen 7 erhaben sind, während die Funktionsfläche außen 9 nicht erhaben ausgebildet ist.

Fig. 6 zeigt einen Kugelkäfig wie Fig. 5, nur daß im Stegbereich 11 zusätzlich mindestens eine Abstützfläche innen 12 ausgeprägt ist, die mitbearbeitet wird.

Das beschriebene Ausführungsbeispiel dient der Erläuterung und ist nicht beschränkend.

### Bezugszeichenliste

- 1: Kugelkäfig
- 2: ringförmiges Kugelsegment
- 3: Äquator
- 4: Kugeltasche
- 5: Anlagefläche
- 6: äquatorparallele Kante
- 7: ringförmige Funktionsfläche
- 7': ringförmige Funktionsfläche
- 8: Referenz-/Aufspannfläche
- 9: ringförmige Funktionsfläche
- 9': ringförmige Funktionsfläche
- 10: Referenz-/Aufspannfläche
- 11: unbearbeiteter Bereich
- 12: Abstützfläche innen
- 13: Abstützfläche außen

## Patentansprüche

1. Kugelkäfig für Gleichlaufgelenke, gebildet aus einem Rohling in Form eines im wesentlichen ringförmigen Kugelsegmentes (2), mit entlang des Äquators angeordneten fensterartigen Kugeltaschen (4) mit im wesentlichen äquatorparallel ausgebildeten Anlageflächen (5) für das Zusammenwirken mit Gelenkkugeln, mit wenigstens an den äußeren Ringkantenbereichen ausgebildeten, im wesentlichen ringförmig verlaufenden Funktionsflächen (9,9') für das Zusammenwirken mit einer Gelenkglocke und mit an inneren Ringbereichen ausgebildeten, im wesentlichen ringförmig verlaufenden Funktionsflächen (7, 7') für das Zusammenwirken mit einem Gelenkstern, **dadurch gekennzeichnet, dass** bei dem Rohling wenigstens einige der Funktionsflächen (7, 9) gegenüber benachbarten Flächen des Kugelkäfigs (1) erhaben ausgebildet sind.

2. Kugelkäfig nach Anspruch 1, **dadurch gekennzeichnet, dass** der Rohling vor Fertigbearbeitung der Funktionsflächen (7, 7',9,9') gehärtet ist.

3. Kugelkäfig nach einem der vorhergehenden Ansprüche, **dadurch gekennzeichnet, dass** bei dem gehärteten Rohling nur die erhabenen Funktionsflächenbereiche (7, 9) durch Hartdrehen bearbeitet sind.

4. Kugelkäfig nach einem der vorhergehenden Ansprüche, **dadurch gekennzeichnet, dass** dieser gedrehte, vorzugsweise hartgedrehte Referenzflächen (8, 10) aufweist.

5. Kugelkäfig nach einem der vorhergehenden Ansprüche, **dadurch gekennzeichnet, dass** die durch Hartdrehen bearbeiteten Funktionsflächen (7, 7', 9, 9') nach der Fertigbearbeitung gegenüber benachbarten Flächen erhaben ausgebildet sind.

6. Kugelkäfig nach einem der vorhergehenden Ansprüche, **dadurch gekennzeichnet, dass** der Rohling in einem Rollverfahren gebildet ist.

7. Kugelkäfig nach einem der vorhergehenden Ansprüche, **dadurch gekennzeichnet, dass** die fensterartigen Kugeltaschen (4) gestanzt sind.

8. Kugelkäfig nach einem der vorhergehenden Ansprüche, **dadurch gekennzeichnet, dass** die fensterartigen Kugeltaschen (4) derart dimensioniert sind, dass die Flächen (6), auf denen die äquatorparallelen Funktionsflächen (5) ausgebildet sind, gegenüber diesen länger sind und beidseitig der Funktionsflächen (5) überstehen.

9. Kugelkäfig für Gleichlaufgelenke, gebildet aus einem Rohling in Form eines im wesentlichen ringförmigen Kugelsegmentes (2), mit entlang des Äquators angeordneten achsparallelen fensterartigen Kugeltaschen (4) mit im wesentlichen äquatorparallel ausgebildeten Anlageflächen (5) für das Zusammenwirken mit Gelenkkugeln, mit mehreren an den äußeren Ringkantenbereichen ausgebildeten, im wesentlichen ringförmig verlaufenden Funktionsflächen (9, 9') für das Zusammenwirken mit einer Gelenkglocke und mit mehreren an den inneren Ringbereichen ausgebildeten, im wesentlichen ringförmig verlaufenden Funktionsflächen (7, 7') für das Zusammenwirken mit einem Gelenkstern, **dadurch gekennzeichnet, dass** bei dem Fertigteil wenigstens einige der Funktionsflächen (7, 7', 9, 9') gegenüber benachbarten Flächen erhaben ausgebildet sind, wobei auf den die Kugeltaschen trennenden Stegbereichen erhaben ausgebildete und durch Hartdrehen bearbeitete Funktionsflächenbereiche vorgesehen sind.

## Claims

1. A ball cage for constant-velocity joints, formed from a blank in the form of a substantially annular ball segment (2), with window-like ball pockets (4) arranged along the equator having abutment surfaces (5) substantially configured to be parallel to the equator for cooperation with joint balls, with function surfaces (9, 9') configured at least at the outer annular edge regions and extending substantially in a ring shape for cooperation with a cup of the joint and with function surfaces (7, 7') configured on inner ring regions and extending substantially in the shape of a ring for cooperation with a star of the joint, **characterized in that** at least some of the function surfaces (7, 9) of the blank are configured to be raised with respect to neighbouring surfaces of the ball cage (1).

2. The ball cage as set forth in claim 1, **characterized in that** the blank is hardened before the function surfaces (7, 7', 9, 9') are being finish-machined.

3. The ball cage as set forth in any one of the afore mentioned claims, **characterized in that** only the raised function surface regions (7, 9) are machined by hard turning on the hardened blank.

4. The ball cage as set forth in any one of the afore mentioned claims, **characterized in that** said ball cage comprises turned, preferably hard turned, reference surfaces (8, 10).

5. The ball cage as set forth in any one of the afore mentioned claims, **characterized in that,** after having been finish-machined, the function surfaces (7, 7', 9, 9') machined by hard turning are configured to be raised with respect to neighbouring surfaces.

6. The ball cage as set forth in any one of the afore mentioned claims, **characterized in that** the blank is formed in a rolling process.

7. The ball cage as set forth in any one of the afore mentioned claims, **characterized in that** the window-like ball pockets (4) are punched.

8. The ball cage as set forth in any one of the afore mentioned claims, **characterized in that** the window-like ball pockets (4) are dimensioned such that the surfaces (6) on which are formed the function surfaces (5) parallel to the equator are longer than these and project beyond said function surfaces (5) on either side thereof.

9. A ball cage for constant-velocity joints, formed from a blank in the form of a substantially annular ball segment (2), with axially parallel window-like ball pockets (4) arranged along the equator having abutment surfaces (5) substantially configured to be parallel to the equator for cooperation with joint balls, with several function surfaces (9, 9') configured at the outer annular edge regions and extending substantially in a ring shape for cooperation with a cup of the joint and with several function surfaces (7, 7') configured on the inner ring regions and extending substantially in the shape of a ring for cooperation with a star of the joint, **characterized in that** at least some of the function surfaces (7, 9) of the finished part are configured to be raised with respect to neighbouring surfaces, function surface regions, which are raised and machined by hard turning, being provided on the web regions separating the ball pockets.

## Revendications

1. Cage à billes pour joints homocinétiques, réalisée à partir d'une ébauche sous forme d'un segment sphérique (2) pour l'essentiel annulaire, avec des poches à bille (4) de type fenêtre disposées le long de l'équateur et présentant des surfaces d'appui (5) sensiblement parallèles à l'équateur qui sont destinées à agir de concert avec des billes d'articulation, avec des surfaces fonctionnelles (9, 9') qui sont réalisées au moins sur les zones de bord annulaire extérieures, s'étendent de façon sensiblement annulaire et sont destinées à coopérer avec une cloche d'articulation, ainsi qu'avec des surfaces fonctionnelles (7, 7') qui sont réalisées sur des zones annulaires intérieures, s'étendent de façon sensiblement annulaire et sont destinées à coopérer avec une étoile d'articulation, **caractérisée par le fait qu'**au moins quelques-unes des surfaces fonctionnelles (7, 9) de l'ébauche sont réalisées de manière à être élevées par rapport à des surfaces voisines de la cage à billes (1).

2. Cage à billes selon la revendication 1, **caractérisée par le fait que** ladite ébauche est durcie avant le finissage des surfaces fonctionnelles (7, 7', 9, 9').

3. Cage à billes selon l'une des revendications précédentes, **caractérisée par le fait que**, dans l'ébauche durcie, uniquement les zones élevées de surface fonctionnelle (7, 9) sont usinées par tournage dur.

4. Cage à billes selon l'une des revendications précédentes, **caractérisée par le fait que** celle-ci présente des surfaces de référence (8, 10) usinées par tournage, de préférence par tournage dur.

5. Cage à billes selon l'une des revendications précédentes, **caractérisée par le fait que**, après avoir achevé le finissage, les surfaces fonctionnelles (7, 7', 9, 9') usinées par tournage dur sont réalisées de manière à être élevées par rapport à des surfaces voisines.

6. Cage à billes selon l'une des revendications précédentes, **caractérisée par le fait que** ladite ébauche est formée dans un processus de roulage.

7. Cage à billes selon l'une des revendications précédentes, **caractérisée par le fait que** lesdites poches à bille (4) de type fenêtre sont poinçonnées.

8. Cage à billes selon l'une des revendications précédentes, **caractérisée par le fait que** les poches à bille (4) de type fenêtre sont dimensionnées de telle façon que les surfaces (6) sur lesquelles sont réalisées lesdites surfaces fonctionnelles (5) parallèles à l'équateur sont plus longues que celles-ci et dépassent de part et d'autre des surfaces fonctionnelles (5).

9. Cage à billes pour joints homocinétiques, réalisée à partir d'une ébauche sous forme d'un segment sphérique (2) pour l'essentiel annulaire, avec des poches à bille (4) de type fenêtre parallèles à l'axe et disposées le long de l'équateur et présentant des surfaces d'appui (5) sensiblement parallèles à l'équateur qui sont destinées à agir de concert avec des billes d'articulation, avec plusieurs surfaces fonctionnelles (9, 9') qui sont réalisées sur les zones de bord annulaire extérieures, s'étendent de façon sensiblement annulaire et sont destinées à coopérer avec une cloche d'articulation, ainsi qu'avec plusieurs surfaces fonctionnelles (7, 7') qui sont réalisées sur les zones annulaires intérieures, s'étendent de façon sensiblement annulaire et sont destinées à coopérer avec une étoile d'articulation, **caractérisée par le fait qu'**au moins quelques-unes des surfaces fonctionnelles (7, 7', 9, 9') de la pièce finie sont réalisées de manière à être élevées par rapport à des surfaces voisines, sur les zones d'entretoise qui séparent lesdites poches à bille étant prévues des zones de surface fonctionnelle qui sont élevées et usinées par tournage dur.
